# EUROPEAN PATENT APPLICATION

(11) **EP 1 754 863 A2**
(43) Date of publication of application: **21.02.2007**
(21) Application number: 06254337.6
(22) Date of filing: 17.08.2006
(51) Int. Cl.: F01D 25/18, F02C 7/224

(54) **Lubricating oil heat recovery system for turbine engines**

(30) Priority: 19.08.2005 US 161859
(71) Applicant: General Electric Company, Schenectady, NY 12345 (US)
(72) Inventor: Taha, Yezin, Greenville, SC 29607 (US); Morgan, Rex A., Simpsonville, SC 29681 (US)
(74) Representative: Pedder, James Cuthbert

(57) **Abstract**

A turbine engine may include an incoming fuel stream (130) and a lubricating oil recirculation system (150). The lubricating oil recirculation system (150) may include a heat exchanger (170) such that waste heat from the lubricating oil recirulation system (150) is transferred to the incoming fuel stream (130).

## Description

### TECHNICAL FIELD

The present invention relates generally to turbine engines and more particularly relates to gas turbine engines with lubricating oil heat rejection systems.

### BACKGROUND OF THE INVENTION

Simple cycle gas turbine engines generally include a compressor to compress the incoming air. The compressed air is then mixed with fuel and burned under pressurized conditions in a combustor. The energy from the hot expanded combustion gases are then captured by a turbine and converted into mechanical energy. A turbine output shaft rotates to spin any connected device, such as a generator to produce electricity. The turbine output shaft generally also drives the compressor.

The turbine and the generator include a number of rotating elements, such as the turbine shaft, positioned within a number of bearings. A lubricating oil stream continually lubricates the bearings. Waste heat generally may be removed from the oil stream via a heat exchanger. The waste heat is typically vented to the atmosphere.

Simple cycle gas turbine engines generally do not utilize a heat source to recover low-level heat that may be available from, for example, a heat recovery steam generator associated with a combined cycle gas turbine engine or elsewhere. Such combined cycle systems may use this low level heat to preheat the incoming fuel.

Any heat that can be recovered from the engine and transferred to the incoming fuel stream may have a direct impact on the operating cost of the gas turbine as a whole. To date, however, the options available for preheating the fuel in a simple cycle gas turbine, if used at all, focus on using an auxiliary heating skid or similar types of devices.

### SUMMARY OF THE INVENTION

The present application thus describes a turbine engine. The turbine engine may include an incoming fuel stream and a lubricating oil recirculation system. The lubricating oil recirculation system may include a heat exchanger such that waste heat from the lubricating oil recirulation system is transferred to the incoming fuel stream.

The turbine engine further may include a turbine such that the turbine is in communication with the lubricating oil recirculation system. The lubricating oil recirculation system may include an oil output stream positioned between the turbine and the heat exchanger and an oil input stream positioned between the turbine and the heat exchanger. The heat exchanger may be positioned upstream of the turbine. The heat exchanger heats the incoming fuel stream by up to about one hundred degrees Fahrenheit (about 37.8 degrees Celsius) or more.

The application further describes a method to warm an incoming fuel stream of a turbine engine with a lubricating oil heat exchanger. The method may include circulating a lubricating oil stream through the lubricating oil heat exchanger, flowing the incoming fuel stream through the lubricating oil heat exchanger, and transferring heat from the lubricating oil stream to the incoming fuel stream. The transferring step may include raising the temperature of the incoming fuel stream with the heat recovered from the lubricating oil stream by up to about one hundred degrees Fahrenheit (about 37.8 degrees Celsius) or more.

The present application further describes a turbine engine. The turbine engine may include a combustor in communication with an incoming fuel stream, a turbine, and a lubricating oil recirculation system in communication with the turbine. The lubricating oil recirculation system may include a heat exchanger and the incoming fuel stream is in communication with the heat exchanger such that waste heat from the lubricating oil recirculation system is transferred to the incoming fuel stream.

The heat exchanger may be positioned upstream of the combustor. The heat exchanger may raise the temperature of the incoming fuel stream by up to about one hundred degrees Fahrenheit (about 37.8 degrees Celsius) or more.

### BRIEF DESCRIPTION OF THE DRAWING

The invention will now be described in greater detail, by way of example, with reference to the drawings, the single figure of which is a schematic view of a turbine engine with a lubricating oil heat recovery system as is described herein.

### DETAILED DESCRIPTION

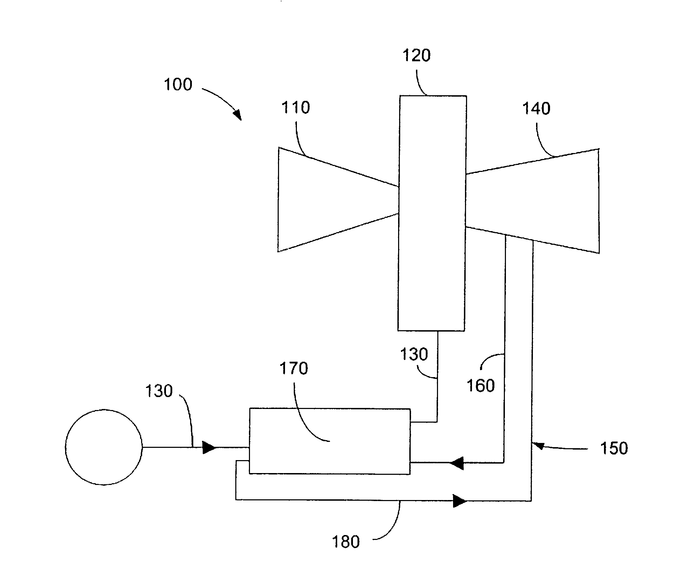

Referring now to the drawing, in which like numbers indicate like elements, Fig. 1 shows a turbine engine 100 as is described herein. The turbine engine 100 may be a simple cycle gas turbine engine or a similar type of device. An example of the turbine engine 100 may be a simple cycle E-Class or F-Class device sold by General Electric Corporation of Schenectady, New York or similar types of devices.

As is known, the turbine engine 100 includes a compressor 110. The compressor 110 compresses an incoming air stream. The turbine engine 100 also includes a combustor 120. As is described above, the combustor 120 mixes the pressurized air stream from the compressor 110 with fuel from a fuel stream 130. The air and the fuel from the fuel stream 130 are then burned under pressurized conditions. The turbine engine 100 also includes turbine 140. As is described above, the turbine 140 turns the hot expanding gases into mechanical energy so as to provide a useful output. Other types of combustion systems may be used herein.

The turbine engine 100 also includes a lubricating oil recirculation system 150. The lubricating oil recirculation system 150 includes an oil output stream 160 associated with the turbine 140 as well as other components such as a generator. The oil output stream 160 leads to a heat exchanger 170. The heat exchanger 170 may be any type of conventional heat exchange device such as plate heat exchangers, shell and tube, or similar types of devices. The heat exchanger 170 may be cross-flow, co-flow, or have any desired orientation. The lubricating oil recirculation system 150 also includes an oil input stream 180. The oil input stream 180 leads from the heat exchanger 170 back to the turbine 140 so as to complete the circuit and lubricate the bearings.

In the turbine engine 100, the fuel stream 130 for the combustor 120 passes through the heat exchanger 170 of the lubricating oil recirculation system 150. As a result, the waste heat from the lubricating oil may be transferred to the incoming fuel stream 130. The heat exchanger 170 may be positioned anywhere upstream of the combustor 130.

Efficiency of the turbine engine 100 as a whole generally may be improved by increasing the temperature of the incoming fuel stream 130. By way of example only, if the lubricating oil heat loss is estimated at about 1.165 megawatts, then heating the incoming fuel stream 130 from about 59 degrees Fahrenheit (about 15 degrees Celsius) with the lubricating oil waste heat to about 130 degrees Fahrenheit (about 54 degrees Celsius) equates to about a 0.295 megawatt recovery. A greater heat recovery may be possible with lower incoming fuel temperatures. The heat exchanger 170 may raise the temperature of the incoming fuel stream 130 by up to about one hundred degrees Fahrenheit (about 37.8 degrees Celsius) or more. (The heat exchanger 170 also may decrease the temperature of the incoming fuel stream 130 in certain situations.) The lubricating oil recirculation system 150 thus may supplement or eliminate the need for other types of fuel warming techniques.

## Claims

1. A turbine engine (100), comprising:
an incoming fuel stream (130); and
a lubricating oil recirculation system (150);
wherein the lubricating oil recirculation system (150) comprises a heat exchanger (170) such that waste heat from the lubricating oil recirulation system (150) is transferred to the incoming fuel stream (130).

2. The turbine engine (100) of claim 1, further comprising a turbine (140) and wherein the turbine (140) is in communication with the lubricating oil recirculation system (150).

3. The turbine engine (100) of claim 2, wherein the lubricating oil recirculation system (150) comprises an oil output stream (160) positioned between the turbine (140) and the heat exchanger (170) and an oil input stream (180) positioned between the turbine (140) and the heat exchanger (170).

4. The turbine engine (100) of claim 2, wherein the heat exchanger (170) is positioned upstream of the turbine (140).

5. The turbine engine (100) of claim 1, wherein the heat exchanger (170) raises the temperature of the incoming fuel stream (130) by up to about one hundred degrees Fahrenheit (about 37.8 degrees Celsius) or more.

6. A method to warm an incoming fuel stream (130) of a turbine engine (100) with a lubricating oil heat exchanger (170), comprising:
circulating a lubricating oil stream (160, 180) through the lubricating oil heat exchanger (170);
flowing the incoming fuel stream (130) through the lubricating oil heat exchanger (170); and
transferring heat from the lubricating oil stream (160, 180) to the incoming fuel stream (130).

7. The method of claim 6, wherein the transferring step comprises raising the temperature of the incoming fuel stream (130) by up to about one hundred degrees Fahrenheit (about 37.8 degrees Celsius).
